# EUROPEAN PATENT APPLICATION

(11) **EP 4 790 394 A1**
(43) Date of publication of application: **12.08.2026**
(21) Application number: 26156198.9
(22) Date of filing: 04.02.2026
(51) Int. Cl.: G01N 23/04

(54) **X-RAY INSPECTION APPARATUS**

(30) Priority: 07.02.2025 JP 2025018846
(71) Applicant: Ishida Co., Ltd., Kyoto-shi Kyoto 606-8392 (JP)
(72) Inventor: YUKI, Shinya, Ritto-shi, Shiga, 520-3026 (JP)
(74) Representative: Global IP Europe Patentanwaltskanzlei

(57) **Abstract**

An X-ray inspection apparatus includes a judgment unit, an inspection condition changing unit, and a touch screen 30. The judgment unit generates X-ray images, applies predetermined inspection conditions to the X-ray images, and judges whether each part of goods is normal or defective. The touch screen 30 displays, as judgment results of the judgment unit, parts judged to be defective in the goods in a different way from parts judged to be normal in the goods. The touch screen 30 allows a user looking at the judgment results to designate the parts judged to be defective in the goods. When the user designates the parts judged to be defective in the goods via the touch screen 30, the inspection condition changing unit changes the inspection conditions so that the "defective" judgment on the designated parts judged to be defective in the goods changes to a "normal" judgment.

## Description

### BACKGROUND

### TECHNICAL FIELD

This invention relates to an X-ray inspection apparatus.

### RELATED ART

Patent document 1 (JP-A No. 2021-25874) discloses a technology that performs X-ray inspections of goods and surrounds the positions of defects in the goods with boxes in X-ray images.

### SUMMARY

### Technical Problem

Users who perform X-ray inspections of goods using X-ray inspection apparatus sometimes view X-ray images in which parts judged to be defective in the goods are indicated and change inspection conditions that are used to judge whether the goods are normal or defective. For example, if actual goods receive a "defective" judgment due to foreign object contamination even though they are not contaminated with foreign objects, the users manually change the inspection conditions of the X-ray inspection apparatus and perform alteration work to ensure that erroneous "defective" judgments do not occur.

However, although such work to manually change the inspection conditions can be performed in a short amount of time by an experienced user, it is difficult for a user with little experience.

It is a problem of the present invention to provide an X-ray inspection apparatus that includes a judgment unit that judges whether each part of goods is normal or defective and can alleviate the burden required of a user to change inspection conditions.

### Solution to Problem

An X-ray inspection apparatus according to a first aspect includes a conveyance unit that conveys goods, an X-ray irradiation unit, an X-ray detection unit, a judgment unit, an inspection condition changing unit, a display unit, and an input unit. The X-ray irradiation unit irradiates the conveyed goods with X-rays. The X-ray detection unit detects the X-rays irradiated by the X-ray irradiation unit. The judgment unit generates X-ray images including the goods based on signals output from the X-ray detection unit, applies predetermined inspection conditions to the X-ray images, and judges whether each part of the goods is normal or defective. The inspection condition changing unit changes the inspection conditions. The display unit displays, as judgment results of the judgment unit, parts judged to be defective in the goods in a different way from parts judged to be normal in the goods. The input unit allows a user looking at the judgment results displayed by the display unit to designate the parts judged to be defective in the goods. When the user designates the parts judged to be defective in the goods via the input unit, the inspection condition changing unit changes the inspection conditions so that the "defective" judgment on the designated parts judged to be defective changes to a "normal" judgment.

Here, each part of the goods is judged to be normal or defective, and the display unit displays the parts judged to be defective in the goods in a different way from the parts judged to be normal in the goods. When the user looking at the judgment results designates the parts judged to be defective in the goods via the input unit, the inspection condition changing unit changes the inspection conditions so that the "defective" judgment on the designated parts judged to be defective changes to a "normal" judgment. Because of this, in the X-ray inspection apparatus according to the first aspect, the workload required of the user to change the inspection conditions is alleviated.

An X-ray inspection apparatus according to a second aspect is the X-ray inspection apparatus of the first aspect, wherein after the inspection conditions have been changed, the judgment unit applies the inspection conditions after the change to the X-ray images and rejudges whether each part of the goods is normal or defective. The display unit displays results of the rejudgment.

Here, a rejudgment of whether each part of the goods is normal or defective applying the inspection conditions after the change is performed, and the results are displayed on the display unit, so the user of the X-ray inspection apparatus can easily judge whether the change to the inspection conditions was appropriate.

An X-ray inspection apparatus according to a third aspect is the X-ray inspection apparatus of the first aspect or the second aspect, further including a storage unit that stores the X-ray images. After the inspection conditions have been changed, the judgment unit applies the inspection conditions that have been changed to past X-ray images stored in the storage unit and judges whether each part of the goods is normal or defective.

Here, a judgment of whether each part of the goods is normal or defective using the past X-ray images is performed by applying the inspection conditions after the change. For this reason, it becomes easier for the user of the X-ray inspection apparatus to judge whether the change to the inspection conditions was appropriate.

An X-ray inspection apparatus according to a fourth aspect is the X-ray inspection apparatus of any of the first aspect to the third aspect, wherein the judgment unit judges whether each part of the goods is normal or defective by applying at least one or more of a sensitivity filter, an attenuation filter, a density filter, and a mask filter to the X-ray images. When the user designates the parts judged to be defective in the goods via the input unit, the inspection condition changing unit changes the inspection conditions by changing the filters or parameters of the filters.

An X-ray inspection apparatus according to a fifth aspect is the X-ray inspection apparatus of any of the first aspect to the fourth aspect, wherein when the judgment unit makes a "defective" judgment in regard to a plurality of parts, the display unit displays a plurality of the parts judged to be defective.

Here, it becomes easier for the user of the X-ray inspection apparatus to perform work required to change the inspection conditions in relation to a plurality of the parts judged to be defective.

An X-ray inspection apparatus according to a sixth aspect is the X-ray inspection apparatus of any of the first aspect to the fifth aspect, wherein the judgment unit applies the predetermined inspection conditions to the X-ray images, calculates judgment values for each part of the goods, and judges whether each part of the goods is normal or defective based on the judgment values. The display unit displays the judgment values together with the parts judged to be defective.

Here, the user of the X-ray inspection apparatus can grasp the judgment values of the parts judged to be defective.

An X-ray inspection apparatus according to a seventh aspect is the X-ray inspection apparatus of any of the first aspect to the sixth aspect, wherein the display unit displays the parts judged to be defective in the goods in a more accentuated way than the parts judged to be normal in the goods.

Here, it becomes easier for the user of the X-ray inspection apparatus to grasp the parts judged to be defective in the goods.

An X-ray inspection apparatus according to an eighth aspect is the X-ray inspection apparatus of any of the first aspect to the fifth aspect, wherein the display unit displays the parts judged to be defective in the goods by superimposing them on the X-ray images.

Here, it becomes easier for the user of the X-ray inspection apparatus to grasp the parts judged to be defective in the goods and their surroundings in the X-ray images.

An X-ray inspection apparatus according to a ninth aspect is the X-ray inspection apparatus of the eighth aspect, wherein the judgment unit applies the predetermined inspection conditions to the X-ray images, calculates judgment values for each part of the goods, and judges whether each part of the goods is normal or defective based on the judgment values. When the user designates the parts judged to be defective in the goods via the input unit, the display unit displays the parts judged to be defective in the goods and displays the judgment values of the parts judged to be defective in the goods by superimposing them on the X-ray images.

Here, the user of the X-ray inspection apparatus can grasp the judgment values of the parts judged to be defective.

An inspection apparatus according to a tenth aspect is the X-ray inspection apparatus of the sixth aspect, wherein the display unit displays a plurality of the judgment values in different ways.

Here, for example, the plurality of judgment values are displayed in different color shades. Because of this, it becomes easier for the user of the X-ray inspection apparatus to grasp how defective is each part judged to be defective.

### Advantageous Effects of Invention

In the X-ray inspection apparatus according to this invention, the inspection condition changing unit changes the inspection conditions so that the "defective" judgment on the designated parts judged to be defective changes to a "normal" judgment. Because of this, according to the X-ray inspection apparatus according to this invention, the workload required of the user to change the inspection conditions is alleviated.

### BRIEF DESCRIPTION OF THE DRAWINGS

FIG. 1 is an external perspective view of an X-ray inspection apparatus according to an embodiment of this invention;
FIG. 2 is a view showing the internal configuration of a shield box of the X-ray inspection apparatus;
FIG. 3 is a schematic diagram showing the principle of X-ray inspection;
FIG. 4 is a view of processes upstream and downstream of the X-ray inspection apparatus;
FIG. 5 is a block diagram of a control computer;
FIG. 6 is a flowchart showing the operation of a foreign object inspection unit;
FIG. 7 shows a screen of a touch screen displaying X-ray images of primal cuts that were judged to be contaminated with foreign objects;
FIG. 8A shows an enlarged screen of image P6 displayed in FIG. 7;
FIG. 8B shows an enlarged screen of image P6 displayed in FIG. 7 and a screen for changing inspection conditions;
FIG. 8C shows an enlarged screen of image P6 displayed in FIG. 7 and a screen for changing inspection conditions; and
FIG. 9 shows a screen showing results of a reinspection performed by a seventh judgment unit on an X-ray image corresponding to image P6 after the threshold of a sensitivity filter of the seventh judgment unit has been changed.

### DETAILED DESCRIPTION

An embodiment of this invention will be described below with reference to the drawings. It will be noted that the following embodiment is a specific example of this invention and is not intended to limit the technical scope of this invention.

### (1) Overall Configuration of X-ray Inspection Apparatus

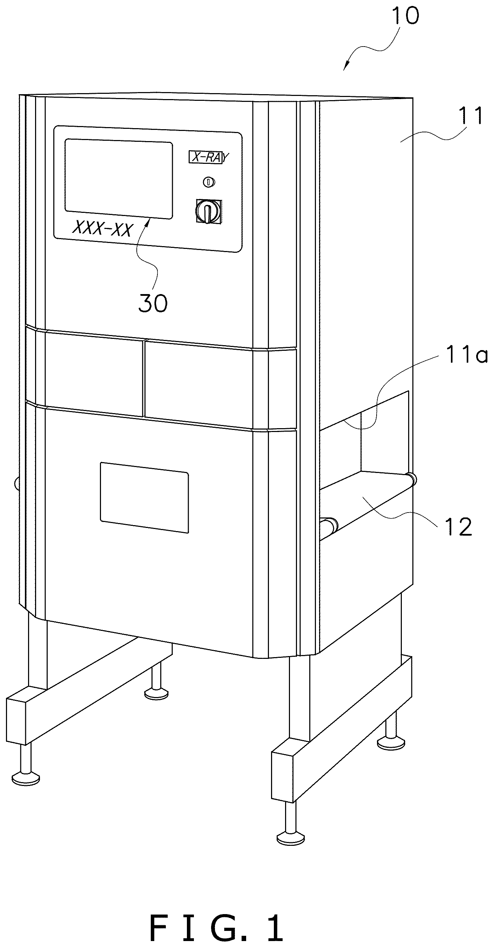

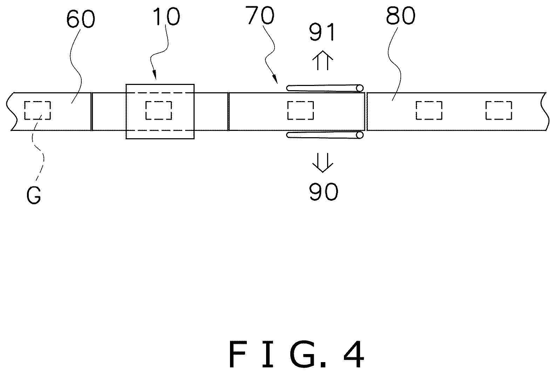

FIG. 1 is an external perspective view of an X-ray inspection apparatus 10 according to an embodiment of this invention. Turning now to FIG. 1, the X-ray inspection apparatus 10 is one apparatus that is incorporated into a production line (see FIG. 4) and performs quality inspections of goods G. The X-ray inspection apparatus 10 irradiates the goods G, which are continuously conveyed thereto, with X-rays to judge whether the goods G are conforming (normal) or nonconforming (defective).

As shown in FIG. 4, the goods G, which are specimens, are transported by an upstream conveyor 60 to the X-ray inspection apparatus 10. The goods G are classified into conforming goods or nonconforming goods as a result of each part of the goods G being judged to be normal or defective in the X-ray inspection apparatus 10. The results of the inspections by the X-ray inspection apparatus 10 are sent to a goods sorting device 70 disposed downstream of the X-ray inspection apparatus 10.

The goods sorting device 70 sends the goods G that have been judged to be conforming goods in the X-ray inspection apparatus 10 to a conveyor 80 for discharging normal goods and sorts the goods G that have been judged to be nonconforming goods in the X-ray inspection apparatus 10 in a nonconforming good discharge direction 90 or a nonconforming good discharge direction 91. The goods sorting device 70 is a device separate from the X-ray inspection apparatus 10.

### (2) Detailed Configuration

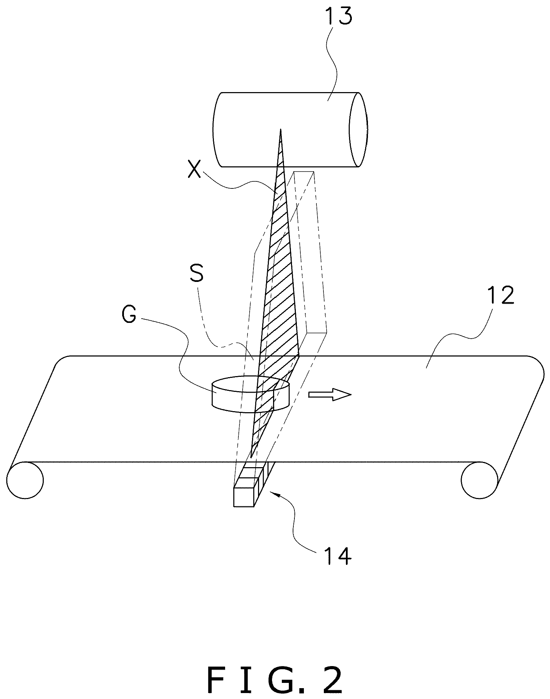

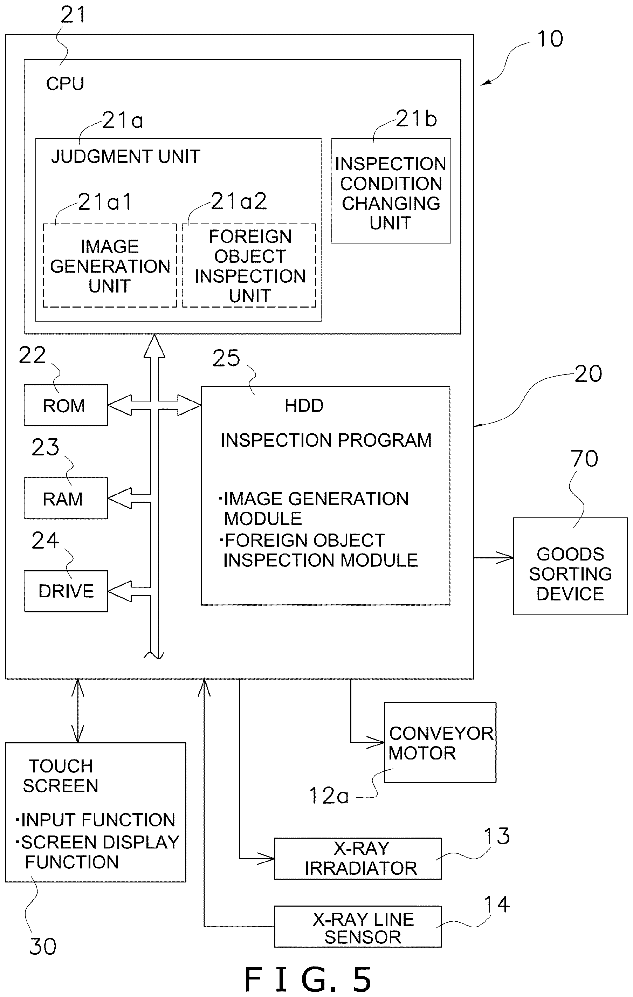

FIG. 2 is a view showing the internal configuration of a shield box 11 of the X-ray inspection apparatus 10. As shown in FIG. 1 and FIG. 2, the X-ray inspection apparatus 10 is configured mainly by a shield box 11, a conveyor 12, an X-ray irradiator 13, an X-ray line sensor 14, a touch screen 30 that is a monitor with a touch panel function (see FIG. 1), and a control computer 20 (see FIG. 5).

### (2-1) Shield Box 11

In both side surfaces of the shield box 11 are formed openings 11a for conveying the goods G into and out of the shield box 11. The openings 11a are closed off by shielding curtains (not shown in the drawings) to prevent X-rays from leaking to the outside of the shield box 11. The shielding curtains are made of a rubber including lead and are pushed aside by the goods G when the goods G pass though the openings 11a.

Inside the shield box 11 are housed the conveyor 12, the X-ray irradiator 13, the X-ray line sensor 14, and the control computer 20, and the like. Furthermore, the touch screen 30 and a power switch are disposed in the upper portion of the front surface of the shield box 11.

### (2-2) Conveyor 12

The conveyor 12 is a conveyance unit that conveys the goods G inside the shield box 11 and, as shown in FIG. 1, is disposed so as to penetrate the openings 11a formed in both side surfaces of the shield box 11. The conveyor 12 has an endless belt that is rotated by a drive roller driven by a conveyor motor 12a (see FIG. 5) to convey the goods G placed on the belt.

### (2-3) X-ray Irradiator 13

As shown in FIG. 2, the X-ray irradiator 13, which serves as an X-ray irradiation unit, is disposed above the conveyor 12 and emits X-rays in a fan-shaped irradiation range X toward the X-ray line sensor 14 located under it. In other words, the X-ray irradiator 13 irradiates with X-rays the goods G being conveyed by the conveyor 12.

### (2-4) X-ray Line Sensor 14

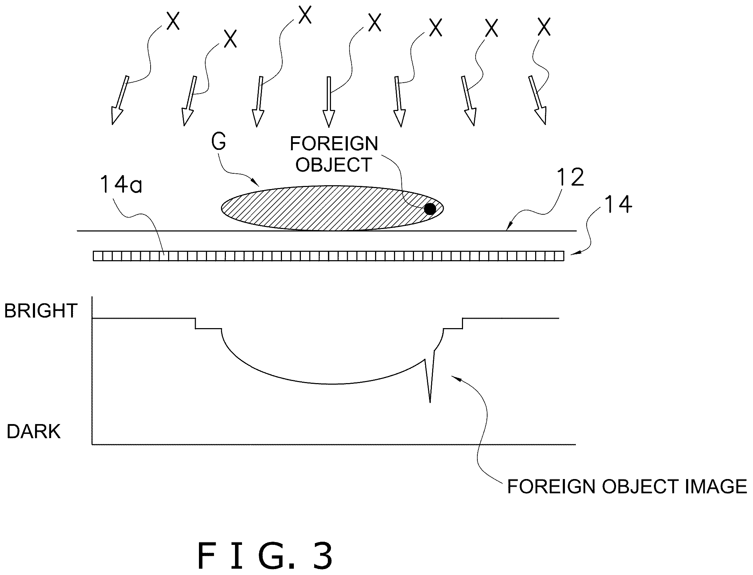

FIG. 3 is a schematic diagram showing the principle of X-ray inspection. Turning now to FIG. 3, the X-ray line sensor 14, which serves as an X-ray detection unit, is disposed under the conveyor 12 and has numerous pixel sensors 14a. The number of the pixel sensors 14a of the X-ray line sensor 14 is several hundred or more than a thousand. The pixel sensors 14a are horizontally arranged in a straight line in a direction orthogonal to the conveyance direction of the conveyor 12. Furthermore, each pixel sensor 14a detects the X-rays transmitted through the goods G and the conveyor 12 and outputs X-ray fluoroscopic image signals. The X-ray fluoroscopic image signals represent the brightness (density) of the X-rays.

In the X-ray inspection apparatus 10, the space directly above the X-ray line sensor 14 in the shield box 11 is a detection region S. Although in FIG. 2 the width dimension of the detection region S in the conveyance direction (the direction indicated by the white arrow in FIG. 2) is enlarged in order to facilitate understanding, the width of the detection region S is equal to the width dimension of the pixel sensors 14a, and the actual width dimension is small.

The X-ray line sensor 14 detects X-rays transmitted through the goods G and the conveyor 12 in the detection region S through which the goods G are conveyed.

### (2-5) Touch Screen 30

The touch screen 30 is a liquid crystal display with a full-dot display and displays a screen that prompts the user to input inspection conditions that are needed during inspections. Furthermore, the touch screen 30 also has a touch panel function and, as an input unit, receives input such as inspection conditions from the user. That is, the touch screen 30 is a device that has both a function as a display unit that presents various types of information to the user and a function as an input unit that receives input from the user.

### (2-6) Control Computer 20

FIG. 5 is a block diagram of the control computer 20. Turning now to FIG. 5, the control computer 20 includes a central processing unit (CPU) 21, a read-only memory (ROM) 22, a random-access memory (RAM) 23, a hard disk drive (HDD) 25, and a drive 24 for inserting storage media, and the like.

The CPU 21 executes various types of programs stored in the ROM 22 or the HDD 25. The HDD 25 stores inspection conditions corresponding to each good and stores and accumulates inspection results. The inspection conditions can be set and changed for each type of good by input from the user using the touch panel function of the touch screen 30.

Moreover, the control computer 20 also includes a display control circuit (not shown in the drawings) that controls the display of data by the touch screen 30, an input circuit (not shown in the drawings) that imports input data input by the user via the touch screen 30, and communication ports (not shown in the drawings) that enable connection to external devices such as a printer (not shown in the drawings) and networks such as a LAN.

The CPU 21, the ROM 22, the RAM 23, the drive 24, and the HDD 25 of the control computer 20 are connected to each other via a bus line such as an address bus or a data bus.

Furthermore, the control computer 20 is connected to the conveyor motor 12a, the encoder 12b, the X-ray irradiator 13, and the X-ray line sensor 14, and the like.

### (3) Configurations of CPU 21

The HDD 25 of the control computer 20 stores an inspection program including an image generation module and a foreign object inspection module. The CPU 21 executing the inspection program has the functions of generating original X-ray images from the signals from the X-ray line sensor 14, applying predetermined inspection conditions to the X-ray images, and judging whether each part of the goods G is normal or defective. That is, the CPU 21 functions as a judgment unit 21a that judges whether each part of the goods G is normal or defective. Furthermore, the CPU 21 executing the inspection program also functions as an inspection condition changing unit 21b that changes the inspection conditions.

The CPU 21 operating as the judgment unit 21a operates as functional units such as an image generation unit 21a1 and a foreign object inspection unit 21a2 (see FIG. 5) by reading and executing the image generation module and the foreign object inspection module.

### (3-1) Image Generation Unit 21a1

The CPU 21 operating as the image generation unit 21a (hereinafter called "the image generation unit 21a1") generates original X-ray images of the goods G based on the X-ray fluoroscopic image signals output from the X-ray line sensor 14. The image generation unit 21a1 acquires, at fine time intervals, the X-ray fluoroscopic image signals output from each of the pixels sensors 14a of the X-ray line sensor 14 and generates X-ray images of the goods G based on the acquired X-ray fluoroscopic image signals. The image generation unit 21a1 generates the X-ray images of the goods G using the X-ray fluoroscopic image signals from a little before the leading ends of the goods G pass through the detection region S to a little after the trailing ends of the goods G pass through the detection region S. The image generation unit 21al generates original X-ray images representing the goods G by combining, in a matrix in a time series, the data for each fine time interval relating to the brightness of the X-rays obtained from each of the pixel sensors 14a of the X-ray line sensor 14.

Furthermore, the image generation unit 21a1 has a function for edge processing that accentuates spatial variations in luminance in the X-ray images as outlines in order to identify the outlines. In other words, the image generation unit 21a1 can detect the boundaries (the outlines of the goods G) between the goods G and parts other than the goods G by detecting places (edges) where there are sharp changes in brightness in the X-ray images.

### (3-2) Foreign Object Inspection Unit 21a2

The CPU 21 operating as the foreign object inspection unit 21a2 (hereinafter called "the foreign object inspection unit 21a2") detects foreign objects included in the goods G by applying predetermined inspection conditions to the original X-ray images and judging whether each part of the goods is normal or defective.

Specifically, the foreign object inspection unit 21a2 performs, for example, binarization processing on the original X-ray images of the goods G generated by the image generation unit 21a1 and compares the gray values of each of the pixels with predetermined thresholds to judge whether the gray values of each of the pixels are equal to or less than the predetermined thresholds. Here, the predetermined thresholds include a threshold for identifying the background and parts other than the background and a threshold for identifying the goods G and parts other than the goods G. The foreign object inspection unit 21a2 performs filter processing on the X-ray images so that, out of all the pixels, pixels where the luminance (intensity) of the transmitted X-rays exceeds the predetermined thresholds are represented by a shading corresponding to white, for example, and pixels where the luminance (intensity) of the transmitted X-rays is equal to or lower than the predetermined thresholds are represented by a shading corresponding to black, for example. When there are regions that appear darker than the preset thresholds in the filtered images of the goods G, the foreign object inspection unit 21a2 judges those regions to be defective parts, judges that foreign objects are present in the parts judged to be defective, and judges those goods G to be nonconforming goods.

### (3-3) Inspection Condition Changing Unit 21b

The inspection condition changing unit 21b adjusts the inspection conditions that the foreign object inspection unit 21a2 applies to the X-ray images and changes the inspection conditions after the adjustment. Below, the adjustment and changing of the inspection conditions using past X-ray images will be described.

### (4) Adjustment and Changing of Inspection Conditions using Past X-ray Images

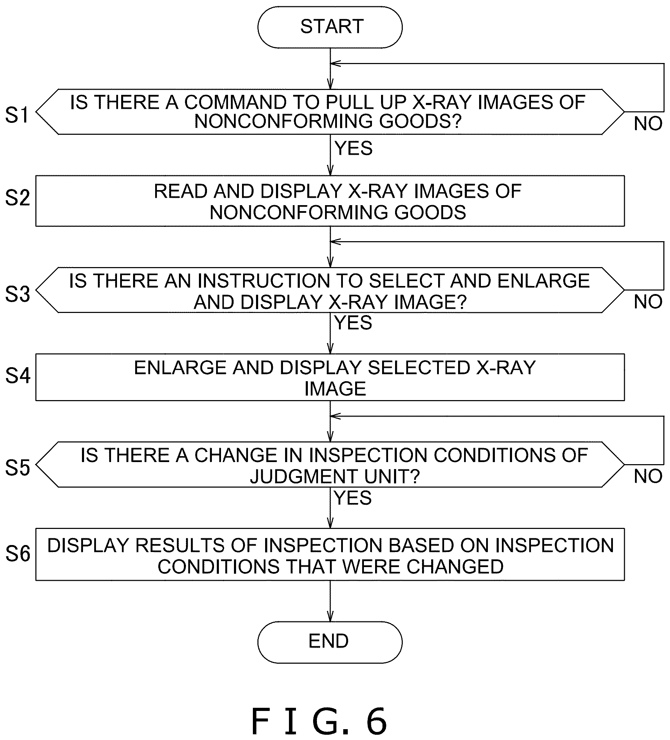

Here, a procedure by which the foreign object inspection unit 21a2 adjusts the inspection conditions using past X-ray images will be described. It will be assumed that the HDD 25 stores X-ray images of primal cuts (the goods G) that were produced and judged to have foreign objects and to be nonconforming in the past. Here, the data of the stored X-ray images are the data of the original X-ray images prior to being subjected to various types of processing (prior to the inspection conditions being applied). FIG. 6 is a flowchart showing the operation of the inspection condition changing unit 21b when adjusting and changing the inspection conditions.

### (4-1) Step S1

Turning now to FIG. 6, in step S1, the inspection condition changing unit 21b judges whether there is a command to call up original X-ray images of nonconforming goods. The call-up command is input by the user from the touch screen 30. The user can call up the X-ray images of the primal cuts that were judged to be contaminated with foreign objects and deemed to be nonconforming goods in the past and adjust and change the inspection conditions in order to optimize the inspection conditions prior to an inspection or during an inspection.

### (4-2) Step S2

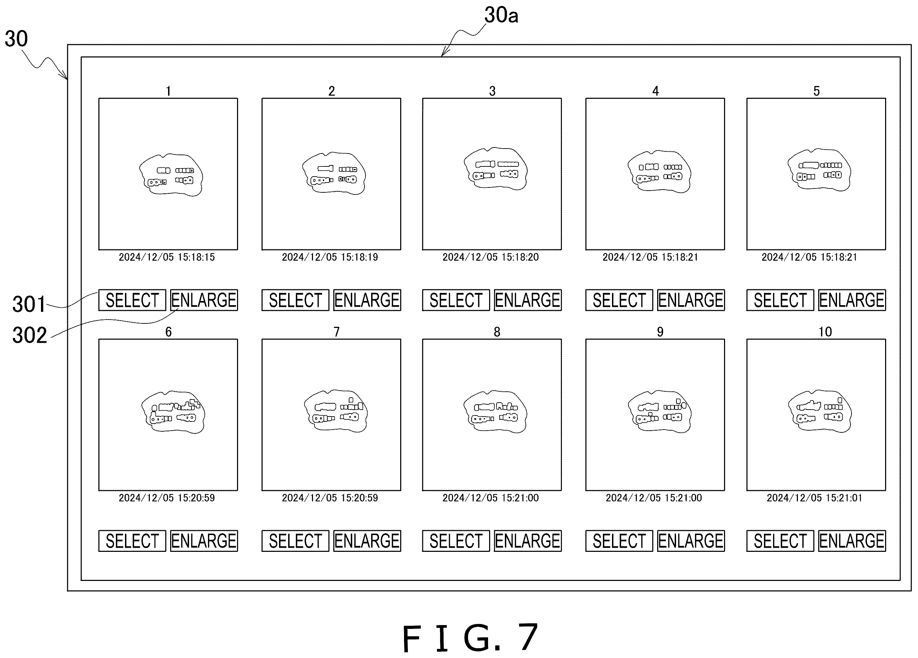

In step S2, the inspection condition changing unit 21b reads and displays on the touch screen 30 the X-ray images of the nonconforming goods (primal cuts) stored in the HDD 25. FIG. 7 is a front view of a screen 30a of the touch screen 30 displaying X-ray images of primal cuts that were judged to be contaminated with foreign objects.

Turning now to FIG. 7, the ten images appearing on the screen 30a of the touch screen 30 are X-ray images of primal cuts stored in the HDD 25. Numbers from 1 to 10 are assigned in chronological order to each of the X-ray images. Each of the images P1 to P10 includes boxes surrounding parts that were judged to include foreign objects (parts judged to be defective) in the primal cuts.

### (4-3) Step S3

In step S3, the inspection condition changing unit 21b judges whether there is an instruction to select and enlarge and display any of the ten X-ray images P1 to P10 appearing on the touch screen 30. For example, when the user discovers an image that the user suspects is a misjudgment among the images P1 to P10, the user presses a select button 301 located under that image and then presses an enlarge button 302 to enlarge and display just that screen.

When the select button 301 and the enlarge button 302 have been pressed, the inspection condition changing unit 21b judges that there is an instruction to select and enlarge and display the corresponding X-ray image and proceeds to step S4. Hereinafter, description will continue on the assumption that image P6 has been selected.

### (4-4) Step S4

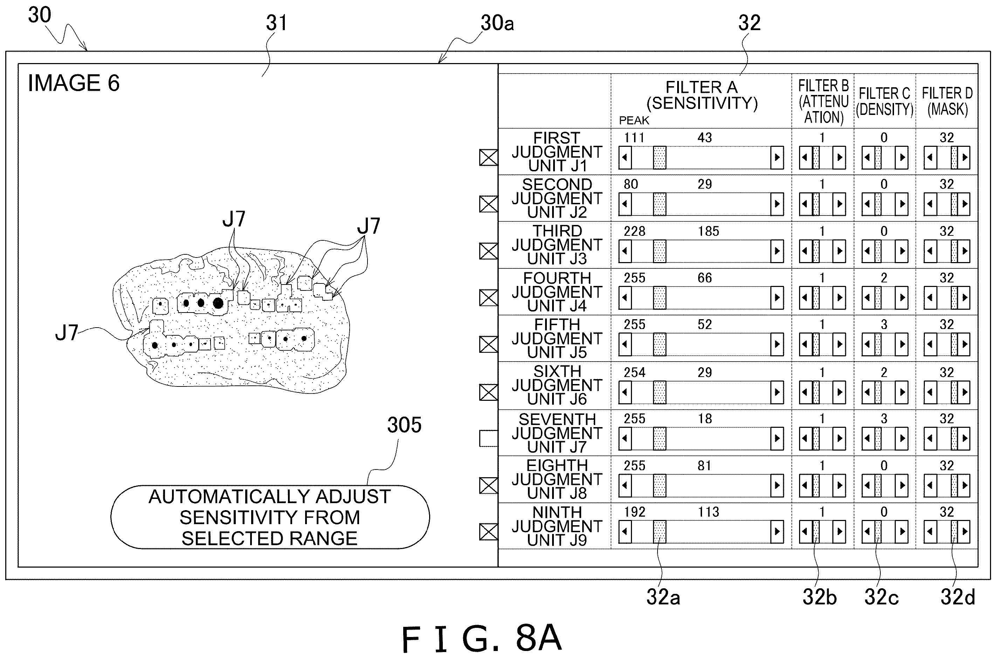

In step S4, the inspection condition changing unit 21b enlarges and displays the selected X-ray image. FIG. 8A shows an enlarged screen of image P6 displayed in FIG. 7. Turning now to FIG. 8A, in a first frame 31 on the left side when viewed from the front is displayed an enlarged image of the X-ray image of the primal cut that was judged to be contaminated with foreign objects.

Furthermore, in a second frame 32 on the right side when viewed from the front are displayed a first judgment unit J1 to a ninth judgment unit J9 that were used to judge whether the primal cut was conforming or nonconforming out of the inspection conditions of the foreign object inspection unit 21a2. Out of these, the judgment units that are to be used as inspection conditions are input by the user from the touch screen 30. The first judgment unit J1 to the ninth judgment unit J9 are the inspection conditions that were input at the time of the previous inspection. The inspection conditions are stored in the HDD 25 together with the data of the original X-ray images such that they are associated with each other.

### (Overview of First Judgment Unit J1 to Ninth Judgment Unit J9)

The first judgment unit J1 to the ninth judgment unit J9 configuring the inspection conditions of the foreign object inspection unit 21a2 perform different types of processing for the judgments or use different conditions even if the types of processing are the same. For example, each judgment unit implements edge processing and binarization processing.

Furthermore, each of the first judgment unit J1 to the ninth judgment unit J9 has a plurality of filters A to D for detecting foreign objects. In this embodiment, the specific content of each of the filters A to D is set by the user.

### (Overview of Filters A to D)

Thresholds serving as criteria for distinguishing whether foreign objects are present are set for each of the filters A to D, and the user sets the thresholds.

If the user makes a mistake in setting a threshold, a conforming good will be judged to be a nonconforming good, or a nonconforming good will be judged to be a conforming good. When the user judges that a threshold was not appropriate in an initial inspection, the user can change the threshold to an appropriate value.

### (Filter A)

In this embodiment, filter A is a sensitivity filter. If, in an image for inspection obtained by performing predetermined processing on the X-ray image, reaction values represented by each of the pixels exceed a set threshold (hereinafter called a "sensitivity threshold"), the region of those pixels is judged to be a defective part. In the sensitivity filter, misdetections are reduced by adjusting the sensitivity threshold. The reaction values represented by each of the pixels are calculated values calculated in regard to each of the pixels by applying inspection conditions (conditions selected from the filters A to D of the first judgment unit J1 to the ninth judgment unit J9) to the original X-ray images of the goods G, and are judgment values for judging whether each part of the goods G is normal or defective.

For example, the peak value of the sensitivity filter in the first judgment unit J1 is 111, and the sensitivity threshold is set to 43. Consequently, if the reaction value is equal to or less than 43, it is judged that the good G is defective, and if the reaction value exceeds 43, it is judged that the good G is normal. As shown in FIG. 8A, the sensitivity thresholds can be changed by sliding cursors 32a left and right.

### (Filter B)

Filter B is an attenuation filter. The attenuation filter judges whether foreign objects are present based on the attenuation of the transmitted X-rays. Misdetections are reduced by adjusting the attenuation level. Furthermore, increasing the attenuation level inhibits extraction of edge portions of the inspection objects appearing in the images so that just foreign objects are extracted with a high sensitivity.

For example, the attenuation filters in each of the first judgment unit J1 to the ninth judgment unit J9 are set to level 1, and if the attenuation exceeds level 1, it is judged that there is a defect. As shown in FIG. 8A, the levels can be changed by sliding cursors 32b left and right.

### (Filter C)

Filter C is a density filter. The density filter judges whether foreign objects are present based on the densities of pixels whose reaction value exceeds the sensitivity threshold in images obtained by performing predetermined processing on the X-ray images. For example, if the reaction value exceeds the sensitivity threshold in just one pixel, it is highly likely due to noise and not a foreign object. By contrast, if the reaction value exceeds the sensitivity threshold in 9 pixels comprising 3 × 3 vertical and horizontal pixels, it is highly likely due to a foreign object. Furthermore, increasing the density of the density filter allows small irregularities in the inspection objects to be ignored and just foreign objects to be extracted.

For example, the density of the density filter in the fourth judgment unit J4 is set to 2, so if the reaction value is equal to or less than the sensitivity threshold of 66 in 4 pixels comprising 2 × 2 vertical and horizontal pixels, the part is judged to be normal, and if the reaction value exceeds the sensitivity threshold of 66, the part is judged to be defective. As shown in FIG. 8A, the densities can be changed by sliding cursors 32c left and right.

### (Filter D)

Filter D is a mask filter. The mask filter masks areas where the reaction values represented by the pixels are smaller than the threshold in the images obtained by performing predetermined processing on the X-ray images, and is not used to judge whether foreign objects are present in those areas. In each of the first judgment unit J1 to the ninth judgment unit J9, the threshold of the mask filter is set to 32 so that packaging material for packaging the inspection objects is not subject to the foreign object inspection. As shown in FIG. 8A, the thresholds can be changed by sliding cursors 32d left and right.

### (4-5) Step S5

Returning now to FIG. 6, in step S5, the inspection condition changing unit 21b judges whether there is a change in the first judgment unit J1 to the ninth judgment unit J9. Boxes labeled "J7" with leader lines in FIG. 8A represent parts (parts judged to be defective) that the seventh judgment unit J7 judged to be defective in the past.

Boxes other than the boxes labeled "J7" surround sites that can clearly be distinguished as having a foreign object. By contrast, the boxes labeled "J7" appear to have no sites that can be distinguished as having a foreign object. Hereinafter, description will continue on the assumption that the seventh judgment unit J7 is making misjudgments.

If the user has doubts about a "defective" judgment on a part judged to be defective, the user can adjust and change the inspection conditions by correcting the thresholds of each of the filters of the seventh judgment unit J7 and performing a reinspection of the past X-ray images stored in the HDD 25, which is a storage device.

The sensitivity threshold of the sensitivity filter of the seventh judgment unit J7 is set to 18, and it is highly likely that the value was one with which the seventh judgment unit J7 tended to judge that defects were present. Consequently, the user adjusts and changes the inspection performance by increasing the sensitivity threshold. Hereinafter, description will continue on the assumption that the user has manually changed the sensitivity threshold of the seventh judgment unit J7 from 18 to 68.

### (4-6) Step S6

In step S6, the inspection condition changing unit 21b performs an inspection using the seventh judgment unit J7, whose sensitivity threshold has been changed to 68, and the first judgment unit J1 to the sixth judgment unit J6, the eighth judgment unit J8, and the ninth judgment unit J9, whose sensitivity thresholds have not been changed, and displays the results on the touch screen 30.

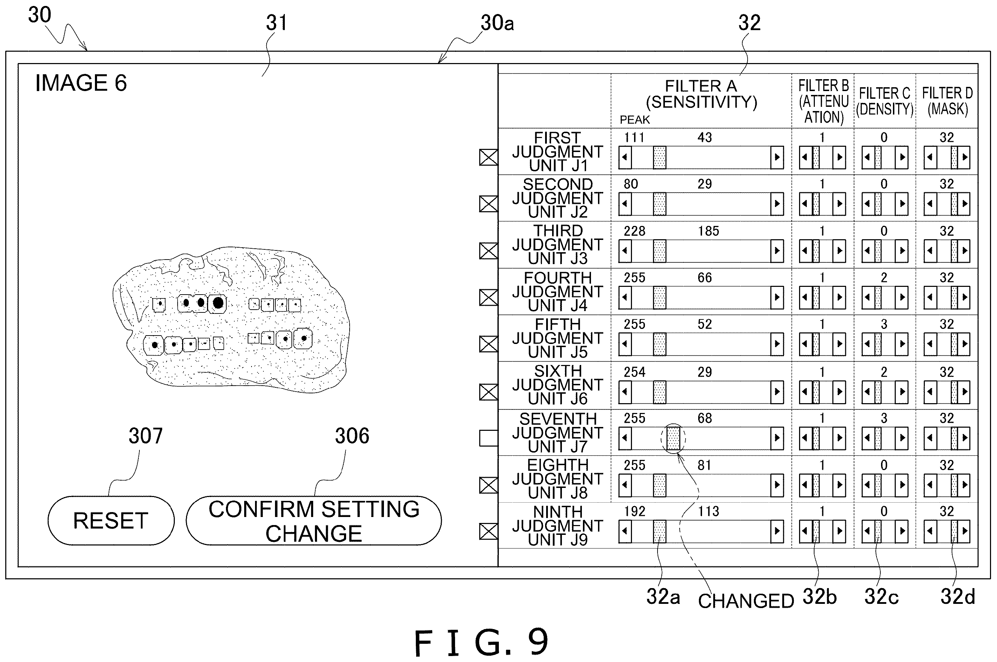

FIG. 9 shows results of a reinspection performed by the seventh judgment unit J7 on the past X-ray image corresponding to image P6 after the sensitivity threshold of the seventh judgment unit J7 has been changed to 68. In FIG. 9, the boxes around the parts that had been judged to be defective in FIG. 7 are gone, and the misjudgments are eliminated.

The user reinspects all the past X-ray images stored in the HDD 25 to check whether the sensitivity threshold that was changed is appropriate. The foreign object inspection unit 21a2 displays the results of the reinspection on the touch screen 30 in a collective display such as shown in FIG. 7.

Furthermore, the user may perform further sensitivity adjustments if there are still "defective" misdetections even after reinspecting, after the sensitivity is adjusted (after the sensitivity threshold is changed), the original X-ray images of the goods (primal cuts) that were judged to be defective in the past.

As described above, according to the inspection condition changing unit 21b, the user can use the past X-ray images to check the extent to which there is a change in the inspection performance as a result of having changed the sensitivity threshold of the seventh judgment unit J7 without running the goods (primal cuts) through the X-ray inspection apparatus.

### (5) Function of Inspection Condition Changing Unit 21b to Automatically Adjust and Change Inspection Conditions

As described above, the user can manually change the inspection conditions by using the screen of FIG. 8A displayed by the inspection condition changing unit 21b on the touch screen 30 to adjust which of the first judgment unit J1 to the ninth judgment unit J9 of the inspection conditions to apply, which of the filters A to D of those judgment units to apply, and the level at which to set the values of the parameters of the filters A to D.

In addition to this, the inspection condition changing unit 21b of the X-ray inspection apparatus 10 of this embodiment also includes a function to automatically adjust and change the inspection conditions. The function to automatically adjust and change the inspection conditions (hereinafter simply called the automatic adjustment function) will be described below.

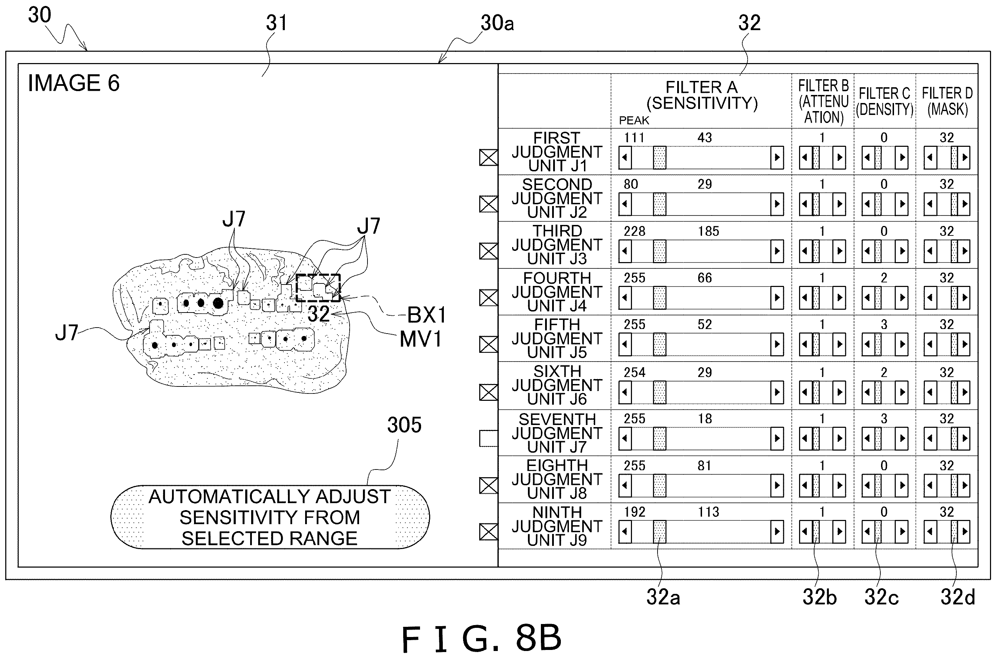

In the screen including the X-ray image shown in FIG. 8A, the user can surround, with dashed-line boxes, regions the user wants to be subject to the automatic adjustment function. Quadrilateral box BX1 shown in FIG. 8B is a box selected by the user to surround doubtful parts judged to be defective. The quadrilateral box BX1 may be automatically drawn when the user touches a specific part on the screen, or the user may draw the quadrilateral box BX1 using a stylus pen or mouse. When the quadrilateral box BX1 is set by the user, the inspection condition changing unit 21b displays, in a numerical value in the neighborhood of the quadrilateral box BX1, a level maximum value of the pixels within that box. Here, "32," which is the value of a level maximum value MV1 of the reaction values of the pixels of filter A of the seventh judgment unit J7, is displayed under the quadrilateral box BX1.

It will be noted that since just the seventh judgment unit J7 is targeted here, just the value of the level maximum value MV1 corresponding thereto is displayed, but when other judgment units are also targeted, the level maximum values of the other judgment units are also displayed in a way that the user can distinguish them by colors associated with each of the judgment units.

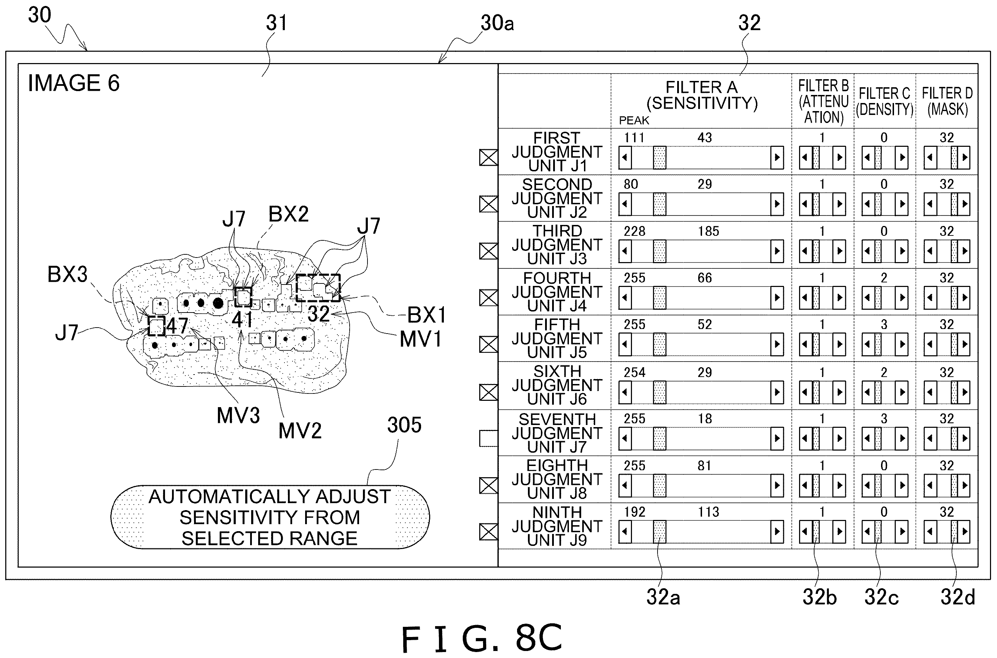

Next, when the user additionally selects other (two) doubtful parts judged to be defective, the inspection condition changing unit 21b displays quadrilateral boxes BX2, BX3 in addition to the quadrilateral box BX1 on the touch screen 30 as shown in FIG. 8C. Furthermore, at the same time, the inspection condition changing unit 21b displays, superimposed on the X-ray image, a level maximum value MV2 (here, 41) of the pixels in the quadrilateral box BX2 and a level maximum value MV3 (here, 47) of the pixels in the quadrilateral box BX3.

Here, although the user can also manually change the sensitivity threshold of the seventh judgment unit J7 by comparing each of the level maximum values MV1, MV2, MV3 with the current sensitivity threshold of the filter A of the seventh judgment unit J7, the inspection condition changing unit 21b has an automatic adjustment button 305 that reads "Automatically Adjust Sensitivity from Selected Range" shown in FIG. 8A to FIG. 8C. When the user touches the automatic adjustment button 305, the sensitivity threshold of the seventh judgment unit J7 is automatically adjusted. As shown in FIG. 8C, when the automatic adjustment button 305 is touched in a state in which the three quadrilateral boxes BX1, BX2, BX3 are selected, the inspection condition changing unit 21b automatically adjusts the sensitivity threshold of the seventh judgment unit J7 so that the parts judged to be defective in the three quadrilateral boxes BX1, BX2, BX3 are not judged to be defective and then moves to the screen shown in FIG. 9. Although in the description of step S5 above it was assumed that the user manually changes the sensitivity threshold of the seventh judgment unit J7 from 18 to 68, here the inspection condition changing unit 21b performs a calculation in accordance with a predetermined algorithm and automatically adjusts (changes) the sensitivity threshold of the seventh judgment unit J7 from 18 to 68.

The user checks the image shown in FIG. 9, which shows judgment results based on the sensitivity threshold changed by the automatic adjustment, and, if the user wants to confirm the sensitivity threshold after the automatic adjustment, the user touches a confirm button 306 that reads "Confirm Setting Change". Because of this, the sensitivity threshold of the seventh judgment unit is changed. However, if, for example, after checking the image shown in FIG. 9 the user thinks that a foreign object has been overlooked with the sensitivity threshold after the change, the user touches a reset button 307 that reads "Reset" in FIG. 9. In this case, the inspection condition changing unit 21b returns the screen to the screen shown in FIG. 8A.

It will be noted that although just the seventh judgment unit J7 is targeted here, when multiple judgment units are targeted, parameters such as the sensitivity thresholds of the multiple judgment units are automatically adjusted at the same time. It is not easy for the user to manually adjust and change numerous parameters, but here the process of adjusting and changing them is automatically performed by the inspection condition changing unit 21b.

Furthermore, similar to the case of manually adjusting and changing the inspection conditions in step S6, the user performs a reinspection of all past X-ray images stored in the HDD 25 in order to check whether the sensitivity threshold that was automatically changed by the inspection condition changing unit 21b is appropriate. The foreign object inspection unit 21a2 displays the results of the reinspection on the touch screen 30 in a collective display such as in FIG. 7. The reinspection of all past X-ray images stored in the HDD 25 may be executed by the inspection condition changing unit 21b after receiving an instruction from the user or may be automatically executed by the inspection condition changing unit 21b after the user touches the confirm button 306 shown in FIG. 9.

### (6) Characteristics

(6-1)
In the X-ray inspection apparatus 10, the foreign object inspection unit 21a2 of the judgment unit 21a judges whether each part of the goods G is normal or defective, and the touch screen 30 displays the parts judged to be defective in the goods G in a different way from the parts judged to be normal in the goods G. Specifically, solid-line boxes on the screen 30a of the touch screen 30 of FIG. 8A to FIG. 8C indicate parts judged to include foreign objects in the primal cut (parts judged to be defective), and the display mode associated with these boxes differentiates the parts judged to be defective in the good G from the parts judged to be normal.

When the user looking at the judgment results on the screen 30a of the touch screen 30 of the X-ray inspection apparatus 10 designates the parts judged to be defective in the good G and the parts judged to be defective in the good G are surrounded by dashed-line boxes (see quadrilateral boxes BX1, BX2, BX3 in FIG. 8B and FIG. 8C), the inspection condition changing unit 21b changes the inspection conditions so that the "defective" judgments on the designated parts judged to be defective change to "normal" judgments. Specifically, when the user touches the automatic adjustment button 305, the inspection conditions are automatically adjusted and changed, and when the user touches the confirm button 306, the change to the inspection conditions is confirmed. In this way, since the X-ray inspection apparatus 10 includes a function to automatically adjust the inspection conditions, the workload required of the user to change the inspection conditions becomes lighter.

(6-2)
The X-ray inspection apparatus 10 applies the inspection conditions that were automatically changed by the inspection condition changing unit 21b and reinspects the past X-ray images stored in the HDD 25. Then, the inspection condition changing unit 21b displays, in a collective display such as shown in FIG. 7 on the touch screen 30, the results of the rejudgment of whether each part of the goods G in the X-ray images is normal or defective. Because of this, the user can easily judge the appropriateness of the automatic change to the inspection conditions by the inspection condition changing unit 21b.

(6-3)
In the X-ray inspection apparatus 10, it is also assumed that initially set inspection conditions will end up deviating from optimal conditions due to a change in the supplier of the goods G thereafter, changes in the temperature of the environment of the X-ray inspection apparatus 10 associated with changes in seasons, and changes in the place where the X-ray inspection apparatus 10 is installed. However, the X-ray inspection apparatus 10 includes the inspection condition changing unit 21b, and the user can easily change the inspection conditions using the automatic adjustment button 305 and the like.

(6-4)
In the X-ray inspection apparatus 10, the foreign object inspection unit 21a2 applies predetermined inspection conditions to the original X-ray images of the goods G, calculates the judgment values of each part of the goods G (the reaction values of each of the pixels), and judges whether each part of the goods G is normal or defective based on the judgment values. Then, as shown in FIG. 8A to FIG. 8C, the inspection condition changing unit 21b displays, superimposed on the X-ray images of the goods G, the quadrilateral boxes BX1, BX2, BX3 surrounding the doubtful parts judged to be defective that the user has selected and the level maximum values MV1, MV2, MV3 of the pixels in those boxes. For this reason, the user of the X-ray inspection apparatus 10 can easily grasp on the X-ray image the level maximum values MV1, MV2, MV3 that are the judgment values of the parts judged to be defective.

### (7) Example Modifications

(7-1)
Although in the above embodiment illustration and detailed description are omitted, the X-ray inspection apparatus 10 can also perform automatic sensitivity adjustments at the same time in regard to a plurality of the judgment units and not just to one of the first judgment unit J1 to the ninth judgment unit J9 of the inspection conditions. Furthermore, the automatic adjustment and changing of the parameter of the filter A that is a sensitivity filter is one example, and in the X-ray inspection apparatus 10, a plurality of the filters and a plurality of the parameters can also be automatically adjusted and changed at the same time by the inspection condition changing unit 21b. In this case, in the display of the screen on the touch screen 30, considering legibility on the part of the user, the parts judged to be defective by the plurality of filters are displayed in colors that differ by filter and/or the parameters of numerical values such as their thresholds are displayed in different colors and/or fonts.

(7-2)
In the above embodiment, the touch screen 30 displays the quadrilateral boxes BX1, BX2, BX3 surrounding the parts judged to be defective in the goods G and displays the parts judged to be normal in the goods G without surrounding them in boxes, for example.

Instead of this, the touch screen 30 may display the parts judged to be defective in the goods G by encircling them, filling them in, or in another way. Furthermore, the touch screen 30 may display the parts judged to be normal in the goods G so that they are not accentuated over the parts judged to be defective in the goods G. For example, the touch screen 30 may display each of the parts (pixels) of the goods G in different shades of color depending on the sizes of the judgment values. Furthermore, the touch screen 30 may also display the level maximum values MV1, MV2, MV3 that are the judgment values of the parts judged to be defective in different shades of colors depending on the sizes of the numerical values. In this case, it becomes easier for the user of the X-ray inspection apparatus 10 to grasp how defective is each of the parts judged to be defective.

### REFERENCE SIGNS LIST

- 10: X-ray Inspection Apparatus
- 12: Conveyor (Conveyance Unit)
- 13: X-ray Irradiator (X-ray Irradiation Unit)
- 14: X-ray Line Sensor (X-ray Detection Unit)
- 21a: Judgment Unit
- 21b: Inspection Condition Changing Unit
- 30: Touch Screen (Display Unit, Input Unit)
- G: Goods

### CITATION LIST

### <Patent Literature>

Patent Document 1: JP-A No. 2021-25874

## Claims

1. An X-ray inspection apparatus comprising:
a conveyance unit configured to convey goods;
an X-ray irradiation unit configured to irradiate the conveyed goods with X-rays;
an X-ray detection unit configured to detect the X-rays irradiated by the X-ray irradiation unit;
a judgment unit configured to generate X-ray images including the goods based on signals output from the X-ray detection unit, apply predetermined inspection conditions to the X-ray images, and judge whether each part of the goods is normal or defective;
an inspection condition changing unit configured to change the inspection conditions;
a display unit configured to display, as judgment results of the judgment unit, parts judged to be defective in the goods in a different way from parts judged to be normal in the goods; and
an input unit configured to receive a user input to designate the parts judged to be defective in the goods,
wherein, based on the user input received by the input unit and designating the parts judged to be defective in the goods, the inspection condition changing unit is configured to change the inspection conditions so that the "defective" judgment on the designated parts judged to be defective changes to a "normal" judgment.

2. The X-ray inspection apparatus of claim 1, wherein
after the inspection conditions have been changed, the judgment unit is configured to apply the inspection conditions after the change to the X-ray images and rejudge whether each part of the goods is normal or defective, and
the display unit is configured to display results of the judgment.

3. The X-ray inspection apparatus of claim 1 or 2, further comprising a storage unit configured to store the X-ray images,
wherein after the inspection conditions have been changed, the judgment unit is configured to apply the inspection conditions that have been changed to past X-ray images stored in the storage unit and perform the judgment.

4. The X-ray inspection apparatus of any of claims 1 to 3, wherein
the judgment unit is configured to judge whether each part of the goods is normal or defective by applying at least one or more of a sensitivity filter, an attenuation filter, a density filter, and a mask filter to the X-ray images, and
based on the user input received by the input unit and designating the parts judged to be defective in the goods, the inspection condition changing unit is configured to change the inspection conditions by changing the filters or parameters of the filters.

5. The X-ray inspection apparatus of any of claims 1 to 4, wherein when the judgment unit makes a "defective" judgment in regard to a plurality of parts, the display unit is configured to display a plurality of the parts judged to be defective.

6. The X-ray inspection apparatus of any of claims 1 to 5, wherein
the judgment unit is configured to apply the predetermined inspection conditions to the X-ray images, calculate judgment values for each part of the goods, and judge whether each part of the goods is normal or defective based on the judgment values, and
the display unit is configured to display the judgment values together with the parts judged to be defective.

7. The X-ray inspection apparatus of any of claims 1 to 6, wherein the display unit is configured to display the parts judged to be defective in the goods in a more accentuated way than the parts judged to be normal in the goods.

8. The X-ray inspection apparatus of any of claims 1 to 5, wherein the display unit is configured to display the parts judged to be defective in the goods by superimposing them on the X-ray images.

9. The X-ray inspection apparatus of claim 8, wherein
the judgment unit is configured to apply the predetermined inspection conditions to the X-ray images, calculate judgment values for each part of the goods, and judge whether each part of the goods is normal or defective based on the judgment values, and
based on the user input received by the input unit and designating the parts judged to be defective in the goods, the display unit is configured to display the parts judged to be defective in the goods and display the judgment values of the parts judged to be defective in the goods by superimposing them on the X-ray images.

10. The X-ray inspection apparatus of claim 6, wherein the display unit is configured to display a plurality of the judgment values in different ways.
